# EUROPÄISCHE PATENTANMELDUNG

(11) **EP 3 222 177 A1**
(43) Veröffentlichungstag der Anmeldung: **27.09.2017**
(21) Anmeldenummer: 17159055.7
(22) Anmeldetag: 03.03.2017
(51) Int. Cl.: A47J 37/07, F24B 3/00

(54) **FEUERSCHALE**

(30) Priorität: 22.03.2016 DE 202016101559 U
(71) Anmelder: GEBRA Nonfood Handelsgesellschaft m.b.H. & Co. KG, 44867 Bochum (DE)
(72) Erfinder: VOLLAK, Sebastian, 42653 Solingen (DE)
(74) Vertreter: Rohmann, Michael

(57) **Zusammenfassung**

Feuerschale für die Verbrennung von Holz, Holzkohle und dergleichen Brennmaterialien, wobei eine Schalenbasis mit einer oberen Schalenöffnung zur Aufnahme des Brennmaterials vorgesehen ist. Es ist eine auf der Schalenbasis angeordnete Funkenschutzeinrichtung vorhanden. Die Funkenschutzeinrichtung deckt die Schalenöffnung lediglich in ihrem Randbereich ab und weist im mittleren Bereich der Schalenöffnung bzw. über den mittleren Bereich der Schalenöffnung eine Ausnehmung auf.

## Beschreibung

Die Erfindung betrifft eine Feuerschale für die Verbrennung von Holz, Holzkohle und dergleichen Brennmaterialien, wobei eine Schalenbasis mit einer oberen Schalenöffnung zur Aufnahme des Brennmaterials vorgesehen ist. - Derartige Feuerschalen werden insbesondere für die Verbrennung von Holz im Freien - beispielsweise in Gärten oder auf Terrassen - betrieben.

Feuerschalen der eingangs genannten Art sind aus der Praxis in unterschiedlichen Ausführungsformen bekannt. Viele dieser bekannten Feuerschalen zeichnen sich durch den Nachteil aus, dass sie aufwendig montierbar und vor allem nur aufwendig handhabbar sind. Grundsätzlich sind auch Feuerschalen mit einer auf der Schalenbasis angeordneten Funkenschutzeinrichtung bekannt. Diese Funkenschutzeinrichtung deckt die Schalenöffnung in der Regel vollflächig ab. Dadurch wird zum einen die Wirkung des Feuers bzw. Lagerfeuers beeinträchtigt. Zum anderen ist das Nachlegen von Brennmaterial aufwendig und kompliziert. Hierzu muss die gesamt Funkenschutzeinrichtung entfernt werden. Ein Problem besteht darin, dass die Funkenschutzeinrichtung bei Benutzung der Feuerschale stark erhitzt wird und deshalb schwierig handhabbar ist. Außerdem ist die exakte Positionierung und Fixierung der Funkenschutzeinrichtung auf der Schalenbasis nicht immer funktionssicher durchführbar. Weiterhin sind die bekannten Feuerschalen nur mit Hilfe von Werkzeugen montierbar und demontierbar. Viele bekannte Feuerschalen bilden komplexe und voluminöse Aggregate und sind deshalb nach ihrem Gebrauch nur schwierig bzw. aufwendig lagerbar. Insoweit besteht Verbesserungsbedarf.

Dementsprechend liegt der Erfindung das technische Problem zugrunde, eine Feuerschale der eingangs genannten Art anzugeben, mit der die vorstehend beschriebenen Nachteile vermieden oder zumindest erheblich reduziert werden können.

Zur Lösung dieses technischen Problems lehrt die Erfindung eine Feuerschale für die Verbrennung von Holz, Holzkohle und dergleichen Brennmaterialien, wobei eine Schalenbasis mit einer oberen Schalenöffnung zur Aufnahme des Brennmaterials vorgesehen ist und wobei eine auf der Schalenbasis angeordnete flächige Funkenschutzeinrichtung vorhanden ist, wobei die Funkenschutzeinrichtung die Schalenöffnung lediglich in ihrem Randbereich abdeckt und im mittleren Bereich der Schalenöffnung bzw. über den mittleren Bereich der Schalenöffnung eine Ausnehmung bzw. eine Zentralausnehmung aufweist.

Die erfindungsgemäße Feuerschale ist für den Betrieb im Freien, insbesondere in Gärten, auf Terrassen oder dergleichen vorgesehen. Es liegt im Rahmen der Erfindung, dass die Feuerschale zumindest einen Standfuß, vorzugsweise eine Mehrzahl von Standfüßen für die Aufstellung der Feuerschale auf einem Untergrund aufweist. Fernerhin liegt es im Rahmen der Erfindung, dass die Funkenschutzeinrichtung der Feuerschale ein separates Bauteil bildet und von der Schalenbasis entfernbar ist bzw. auf die Schalenbasis aufsetzbar ist. - Wenn hier und nachfolgend die Begriffe "oben" und/oder "unten" gebraucht werden, beziehen sich diese auf den Betriebszustand der Feuerschale, in dem sie insbesondere mit ihrem Standfuß bzw. mit ihren Standfüßen auf einem Untergrund aufsteht.

Es liegt weiterhin im Rahmen der Erfindung, dass die Schalenbasis der erfindungsgemäßen Feuerschale einen unteren Schalenboden aufweist und eine an den Schalenboden angeschlossene - insbesondere einstückig angeschlossene - über den Umfang der Schalenbasis umlaufende Schalenwand aufweist. Zweckmäßigerweise besteht die Schalenbasis aus einem Metall und vorzugsweise aus Stahl bzw. Stahlblech oder im Wesentlichen aus Stahl bzw. Stahlblech. Gemäß bevorzugter Ausführungsform der Erfindung geht der - im Betriebszustand der Feuerschale vorzugsweise horizontal orientierte Schalenboden - über einen abgerundeten Übergangsbereich in die - im Betriebszustand bevorzugt vertikal orientierte - Schalenwand über. Es liegt im Rahmen der Erfindung, dass die erfindungsgemäße Feuerschale in der Draufsicht rund und empfohlenermaßen kreisförmig ausgebildet ist.

Eine Ausführungsform, der im Rahmen der Erfindung ganz besondere Bedeutung zukommt, ist dadurch gekennzeichnet, dass die Funkenschutzeinrichtung eine gitterartige bzw. gitterförmige Funkenschutzfläche aufweist und dass vorzugsweise diese Funkenschutzfläche über den Umfang der Schalenbasis bzw. über den Umfang des Randbereiches der Schalenöffnung umläuft. Zweckmäßigerweise läuft die Funkenschutzeinrichtung über den Umfang des oberen Randes der Schalenwand um. Es liegt im Rahmen der Erfindung, dass die Funkenschutzeinrichtung als Funkenschutzgitter mit sich kreuzenden Gitterstäben ausgebildet ist. Dabei handelt es sich insbesondere um ein Drahtgitter mit Gitterstäben aus Metall bzw. mit Gitterstäben in Form von Metalldraht bzw. Stahldraht. Fernerhin liegt es im Rahmen der Erfindung, dass die Maschenweite des Funkenschutzgitters mit der Maßgabe eingerichtet ist, dass ein ausreichender Schutz gegen aus der Schalenbasis fliegende bzw. spritzende Funken gewährleistet ist. Das Funkenschutzgitter der erfindungsgemäßen Feuerschale weist empfohlenermaßen eine Maschenweite x · y mit x und/oder y = 0,2 bis 14 mm, bevorzugt 0,2 bis 12 mm, sehr bevorzugt 0,3 bis 10 mm und insbesondere 0,3 bis 0,9 mm auf.

Nach besonders empfohlener Ausführungsform der Erfindung deckt die Funkenschutzeinrichtung bzw. das Funkenschutzgitter mindestens 10%, vorzugsweise mindestens 15%, bevorzugt mindestens 20% und insbesondere mindestens 25% der Öffnungsfläche bzw. der im Betriebszustand horizontalen Öffnungsfläche der Schalenöffnung ab. Besonders bevorzugt deckt die Funkenschutzreinrichtung bzw. das Funkenschutzgitter mindestens 30% der Öffnungsfläche bzw. der horizontalen Öffnungsfläche der Schalenöffnung ab. Es empfiehlt sich, dass die Funkenschutzeinrichtung bzw. das Funkenschutzgitter maximal 85%, zweckmäßigerweise maximal 80%, vorzugsweise maximal 75%, bevorzugt maximal 70% und insbesondere maximal 65% der Öffnungsfläche bzw. der im Betriebszustand der Feuerschale horizontalen Öffnungsfläche der Schalenöffnung abdeckt. Die Abdeckungsfläche der Funkenschutzeinrichtung bzw. des Funkenschutzgitters wird dabei insbesondere durch die Projektion der Funkenschutzfläche bzw. der Fläche des Funkenschutzgitters auf die horizontale Öffnungsfläche der Schalenöffnung bestimmt. Wie oben bereits beschrieben läuft dabei bevorzugt die Funkenschutzeinrichtung bzw. das Funkenschutzgitter über den Umfang des oberen Randes der Schalenbasis um.

Eine bevorzugte Ausführungsform der Erfindung ist dadurch gekennzeichnet, dass die von der Funkenschutzeinrichtung umgebene Ausnehmung bzw. Zentralausnehmung eine Ausnehmungsfläche aufweist, die mindestens 10%, vorzugsweise mindestens 15%, bevorzugt mindestens 20% und insbesondere mindestens 25% der Öffnungsfläche der Schalenöffnung bzw. der im Betriebszustand horizontal orientierten Öffnungsfläche der Schalenöffnung entspricht. Gemäß einer Ausführungsvariante entspricht die Ausnehmungsfläche mindestens 30%, zweckmäßigerweise mindestens 35%, vorzugsweise mindestens 40%, bevorzugt mindestens 45% und insbesondere mindestens 50% der Öffnungsfläche bzw. der im Betriebszustand horizontal orientierten Öffnungsfläche der Schalenöffnung. Auch hier wird empfohlenermaßen die Fläche durch Projektion der Ausnehmungsfläche auf die horizontale Öffnungsfläche der Schalenöffnung bestimmt. Zweckmäßigerweise ist die Ausnehmung bzw. Zentralausnehmung in der Draufsicht rund und insbesondere kreisrund ausgebildet. Gemäß bevorzugter Ausführungsform der Erfindung ist die Zentralausnehmung über der Mitte der Feuerschale bzw. über der Mitte des Schalenbodens angeordnet. Mit dem Begriff Zentralausnehmung ist im Rahmen der Erfindung aber nicht zwingend gemeint, dass die Ausnehmung über dieser Mitte angeordnet sein muss. Grundsätzlich könnte die Ausnehmung bzw. Zentralausnehmung auch etwas versetzt zur Mitte der Schalenbasis angeordnet sein.

Eine sehr empfohlene Ausführungsform der Erfindung ist dadurch gekennzeichnet, dass die Funkenschutzeinrichtung zumindest eine von der Schalenbasis aus schräg zur Ausnehmung bzw. Zentralausnehmung hin aufsteigende Funkenschutzfläche aufweist. Zweckmäßigerweise steigt somit die Funkenschutzfläche bzw. das Funkenschutzgitter von dem oberen Rand der Schalenwand bis zur Ausnehmung bzw. Zentralausnehmung hin an. Ansteigen bezieht sich hier auf den aufgestellten Betriebszustand der Feuerschale. Gemäß besonders bevorzugter Ausführungsform ist dabei die Funkenschutzfläche nach oben hin gewölbt ausgebildet. Vorzugsweise ist die über den Umfang der Schalenbasis umlaufende Funkenschutzfläche kugelschalenabschnittsförmig ausgeführt. Es empfiehlt sich, dass der Höhenunterschied Δh zwischen dem oberen Rand der Schalenwand und der Ausnehmung bzw. Zentralausnehmung mindestens 40%, vorzugsweise mindestens 50% und zweckmäßigerweise mindestens 60% der Höhe H bzw. der vertikalen Höhe H der Schalenwand entspricht.

Gemäß sehr empfohlener Ausführungsform der Erfindung weist die Funkenschutzeinrichtung zumindest ein Positionierelement zur Positionierung der Funkenschutzeinrichtung auf der Schalenbasis auf, welches Positionierelement mit zumindest einem an der Schalenwand, insbesondere am oberen Rand der Schalenwand angeordneten Komplementärelement in Eingriff ist bzw. in Eingriff bringbar ist. Vorzugsweise ist das zumindest eine Positionierelement als Positionierlasche oder Positionierstift ausgebildet und ein zugeordnetes Komplementärelement ist dann zweckmäßigerweise als Komplementärnut oder als Komplementäröffnung für die Aufnahme der Positionierlasche bzw. des Positionierstiftes ausgeführt. Empfohlenermaßen weist die Funkenschutzeinrichtung eine Mehrzahl von Positionierelementen auf, welche Positionierelemente zweckmäßigerweise über den Umfang der Funkenschutzeinrichtung verteilt angeordnet sind und bevorzugt mit gleichen Abständen bzw. mit im Wesentlichen gleichen Abständen zueinander angeordnet sind. Dann ist vorzugsweise eine entsprechende Anzahl von damit wechselwirkenden Komplementärelementen an der Schalenwand bzw. am oberen Rand der Schalenwand angeordnet und bevorzugt über den Umfang des oberen Randes der Schalenwand verteilt angeordnet und zweckmäßigerweise mit gleichen bzw. mit im Wesentlichen gleichen Abständen zueinander angeordnet. Gemäß einer Ausführungsvariante sind die Positionierelemente als am unteren Rand der Funkenschutzeinrichtung vorgesehene Positionierlaschen ausgebildet und die Komplementärelemente an der Schalenwand bzw. am oberen Rand der Schalenwand sind als nach oben hin offene Positioniernuten ausgeführt, in die die Positionierlaschen der Funkenschutzeinrichtung eingelegt werden.

Nach einer bewährten Ausführungsform der Erfindung weist die erfindungsgemäße Feuerschale zumindest eine Hitzeschutzeinrichtung auf und zwar zum Schutz des unter der Feuerschale angeordneten Untergrundes vor Hitze. Zweckmäßigerweise ist die Hitzeschutzeinrichtung unterhalb der Schalenbasis - vorzugsweise mit Abstand zur Unterseite des Schalenbodens - positioniert. Empfohlenermaßen weist die Hitzeschutzeinrichtung zumindest eine Hitzeschutzplatte und bevorzugt eine Hitzeschutzplatte auf. Zweckmäßigerweise ist die Hitzeschutzplatte unterhalb des Schalenbodens und bevorzugt parallel bzw. im Wesentlichen parallel zum Schalenboden angeordnet. Es empfiehlt sich, dass der Abstand a der Hitzeschutzeinrichtung bzw. der Hitzeschutzplatte von der Unterseite des Schalenbodens zumindest 10%, bevorzugt zumindest 15%, sehr bevorzugt zumindest 20%, besonders bevorzugt zumindest 25% und insbesondere mindestens 30% des Abstandes A der Unterseite des Schalenbodens von dem Untergrund beträgt. Zweckmäßigerweise ist die Hitzeschutzeinrichtung bzw. die Hitzeschutzplatte mittels zumindest eines Fixierungselementes am Schalenboden und vorzugsweise in der Mitte des Schalenbodens fixiert. Es hat sich bewährt, dass die Hitzeschutzeinrichtung bzw. die Hitzeschutzplatte mittels zumindest eines Fixierungsstiftes - beispielsweise mit Hilfe einer Fixierungsschraube bzw. mit Hilfe eines Fixierungsbolzens - fixiert ist, wobei dieser Fixierungsstift empfohlenermaßen sowohl den Schalenboden als auch die Hitzeschutzeinrichtung bzw. die Hitzeschutzplatte durchgreift. Die Hitzeschutzeinrichtung bzw. die Hitzeschutzplatte ist insbesondere mit der Maßgabe eingerichtet, dass bei Befeuerung der Feuerschale der Untergrund unter der Feuerschale Temperaturen nicht über 50°C ausgesetzt ist.

Gegenstand der Erfindung ist weiterhin ein Feuerschalenaggregat aus einer Feuerschale und zumindest einer Manipuliervorrichtung, wobei die Feuerschale eine Schalenbasis und eine auf der Schalenbasis angeordnete Funkenschutzeinrichtung - vorzugsweise ein Funkenschutzgitter - aufweist, wobei die Funkenschutzeinrichtung von der Schalenbasis abnehmbar ist, wobei die Funkenschutzeinrichtung zumindest ein Manipulierelement - insbesondere zumindest eine Manipulieröffnung - aufweist, wobei die Manipuliervorrichtung mit dem Manipulierelement bzw. mit der Manipulieröffnung in Eingriff bringbar ist, so dass mittels der Manipuliervorrichtung die Funkenschutzeinrichtung von der Schalenbasis bzw. von dem oberen Rand der Schalenwand abhebbar bzw. entfernbar ist. Die Manipuliervorrichtung ist zweckmäßigerweise als stabförmige Manipuliervorrichtung ausgebildet und bevorzugt kann ein Ende der stabförmigen Manipuliervorrichtung mit der Funkenschutzeinrichtung zur Handhabung der Funkenschutzeinrichtung in Eingriff gebracht werden.

Eine sehr bewährte Ausführungsform der Erfindung ist dadurch gekennzeichnet, dass das zumindest eine Manipulierelement - insbesondere die zumindest eine Manipulieröffnung - an dem die Ausnehmung bzw. Zentralausnehmung begrenzenden Rand der Funkenschutzeinrichtung positioniert ist. Vorzugsweise ist ein Einfassungsring der Funkenschutzeinrichtung an dem die Ausnehmung bzw. Zentralausnehmung begrenzenden Rand der Funkenschutzeinrichtung angeordnet. Zweckmäßigerweise ist das zumindest eine Manipulierelement - vorzugsweise die zumindest eine Manipulieröffnung - an bzw. in dem Einfassungsring vorgesehen.

Es empfiehlt sich, dass die Manipuliervorrichtung zumindest eine Manipulierkomponente, bevorzugt zumindest einen Manipulierstift für die Wechselwirkung mit einem Manipulierelement der Funkenschutzeinrichtung aufweist. Gemäß besonders bevorzugter Ausführungsform der Erfindung ist die Manipuliervorrichtung mit zumindest zwei, bevorzugt mit zwei Manipulierstiften für den Eingriff in zumindest zwei zugeordnete, bevorzugt in zwei zugeordnete Manipulieröffnungen der Funkenschutzeinrichtung ausgestattet. Zweckmäßigerweise sind die beiden Manipulieröffnungen in dem genannten Einfassungsring der Funkenschutzeinrichtung vorgesehen. Es liegt dabei im Rahmen der Erfindung, dass die Manipuliervorrichtung stabförmig ausgebildet ist und dass die beiden Manipulierstifte an einem Ende der stabförmigen Manipuliervorrichtung positioniert sind. Somit kann die stabförmige Manipuliervorrichtung an einem Ende erfasst werden und die Manipulierstifte an dem anderen Ende der stabförmigen Manipuliervorrichtung können in die Manipulieröffnungen der Funkenschutzeinrichtung eingeführt werden. Anschließend kann mittels der stabförmigen Manipuliervorrichtung die Funkenschutzeinrichtung auf einfache und wenig kraftaufwendige Weise von der Schalenbasis der Feuerschale entfernt bzw. abgehoben werden.

Nach einer bevorzugten Ausführungsvariante weist die Manipuliervorrichtung bzw. die stabförmige Manipuliervorrichtung zumindest ein Abstützelement - vorzugsweise ein Abstützelement - für die Abstützung der Manipuliervorrichtung auf. Mit diesem Abstützelement kann die Manipuliervorrichtung - insbesondere nach Einführung der Manipulierstifte in die Manipulieröffnungen - im Zuge des Anhebens der Funkenschutzeinrichtung auf der Funkenschutzeinrichtung abgestützt werden. Zweckmäßigerweise ist das zumindest eine Abstützelement an dem gleichen Ende der stabförmigen Manipuliervorrichtung angeordnet wie der zumindest eine Manipulierstift bzw. wie die bevorzugt vorgesehenen beiden Manipulierstifte. Es liegt im Rahmen der Erfindung, dass der zumindest eine Manipulierstift bzw. die Manipulierstifte der stabförmigen Manipuliervorrichtung in zumindest eine Manipulieröffnung bzw. in Manipulieröffnungen der Funkenschutzeinrichtung eingeführt werden und dass dann die stabförmige Manipuliervorrichtung zum Abheben der Funkenschutzeinrichtung auf der Funkenschutzeinrichtung mit dem Abstützelement abgestützt wird. So kann die Funkenschutzeinrichtung funktionssicher und wenig kraftaufwendig mittels der stabförmigen Manipuliervorrichtung von der Schalenbasis entfernt werden.

Eine ganz besonders bevorzugte Ausführungsform der Erfindung ist dadurch gekennzeichnet, dass die Manipuliervorrichtung bzw. die stabförmige Manipuliervorrichtung als Schürhaken für die Feuerschale ausgebildet ist. Es liegt dabei im Rahmen der Erfindung, dass der Schürhaken - in an sich üblicher Weise - mit zumindest einem bzw. mit einem Hakenfortsatz ausgestattet ist, der bevorzugt quer bzw. senkrecht zur Längsrichtung der stabförmigen Manipuliervorrichtung ausgerichtet ist. Es empfiehlt sich, dass der Hakenfortsatz und der zumindest eine Manipulierstift - bevorzugt die beiden Manipulierstifte - an dem gleichen Ende der stabförmigen Manipuliervorrichtung bzw. des Schürhakens angeordnet sind. Empfohlenermaßen ist auch das zumindest eine Abstützelement an diesem Ende der stabförmigen Manipuliervorrichtung vorgesehen.

Eine bevorzugte Ausführungsform der Erfindung ist dadurch gekennzeichnet, dass die stabförmige Manipuliervorrichtung zumindest einen parallel zu ihrer Längsachse verschiebbaren Handgriff aufweist. Zweckmäßigerweise ist vor dem mit dem Hakenfortsatz und/oder mit dem zumindest einen Manipulierstift versehenen Ende der stabförmigen Manipuliervorrichtung zumindest ein Begrenzungselement für die Begrenzung der Verschiebbarkeit des Handgriffes vorgesehen. Bei diesem Begrenzungselement kann es sich um zumindest einen aus der stabförmigen Manipuliervorrichtung herausragenden Nocken handeln, an der der verschiebbare Handgriff anschlägt bzw. zur Anlage gebracht wird.

Der Erfindung liegt die Erkenntnis zugrunde, dass die erfindungsgemäße Feuerschale auf besonders einfache, funktionssichere und wenig aufwendige Weise sowohl montierbar als auch handhabbar ist. Wenngleich erfindungsgemäß die Funkenschutzeinrichtung lediglich über den Randbereich der Feuerschale umläuft wird nichtsdestoweniger ein funktionssicherer und effektiver Funkenschutz gewährleistet. Durch die erfindungsgemäße Anordnung der Funkenschutzeinrichtung kommt das in der Feuerschale entfachte Feuer optimal zur Wirkung bzw. zur Geltung und wird durch die Funkenschutzeinrichtung nicht weiter beeinträchtigt. Die lediglich über den Randbereich umlaufende Funkenschutzeinrichtung ermöglicht es auch, dass im Betrieb der Feuerschale Brennmaterial durch die Zentralausnehmung der Funkenschutzeinrichtung nachgelegt werden kann. Insoweit entfällt hier eine zusätzliche, dazu erforderliche Entfernung der Funkenschutzeinrichtung. Weiterhin kann im Rahmen der Erfindung die Funkenschutzeinrichtung sehr präzise und funktionssicher auf der Schalenbasis bzw. auf der Schalenwand der Feuerschale positioniert werden. Mittels der erfindungsgemäßen Manipuliervorrichtung kann die Funkenschutzeinrichtung auf einfache und wenig kraftaufwendige Weise von der Schalenbasis entfernt bzw. abgehoben werden. Die konkrete Ausgestaltung der Manipuliervorrichtung ermöglicht hier eine sehr flexible und variable Handhabung. Die nach bevorzugter Ausführungsform der Erfindung mögliche Abstützung der Manipuliervorrichtung auf der Funkenschutzeinrichtung und die mittels der Positionierung des verschiebbaren Handgriffes optimierte Hebelwirkung reduziert den Aufwand bzw. Kraftaufwand bei der Handhabung der Funkenschutzeinrichtung erheblich. Die erfindungsgemäße Feuerschale ist grundsätzlich auch ohne Zuhilfenahme von Werkzeugen lediglich durch einfache Schraubverbindungen manuell montierbar bzw. zusammenbaubar und auch wieder demontierbar. Dadurch, dass die Funkenschutzeinrichtung relativ wenig sperrig ausgebildet ist und nach Benutzung der erfindungsgemäßen Feuerschale einfach in die Basisschale eingelegt werden kann, resultiert ein sehr kompaktes Aggregat, das auf platzsparende und einfache Weise nach Betrieb der Feuerschale transportiert und gelagert werden kann. Hervorzuheben ist auch, dass die erfindungsgemäße Feuerschale mit geringen Kosten realisiert werden kann. Weiterhin kann mit der vorzugsweise vorgesehenen Hitzeschutzeinrichtung bzw. Hitzeschutzplatte der Untergrund unter der Feuerschale effektiv gegen zu hohe Temperaturen geschützt werden und es wird gewährleistet, dass der Untergrund bzw. Boden nicht mit Temperaturen über 50°C beaufschlagt wird. Insgesamt zeichnet sich die erfindungsgemäße Feuerschale durch eine sehr einfache und wenig komplizierte Handhabung sowie durch einen kompakten Aufbau und durch geringen Kostenaufwand aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung eines erfindungsgemäßen Feuerschalenaggregates mit einer erfindungsgemäßen Feuerschale und einer erfindungsgemäßen Manipuliervorrichtung,
- Fig.2: eine Unteransicht der erfindungsgemäßen Feuerschale,

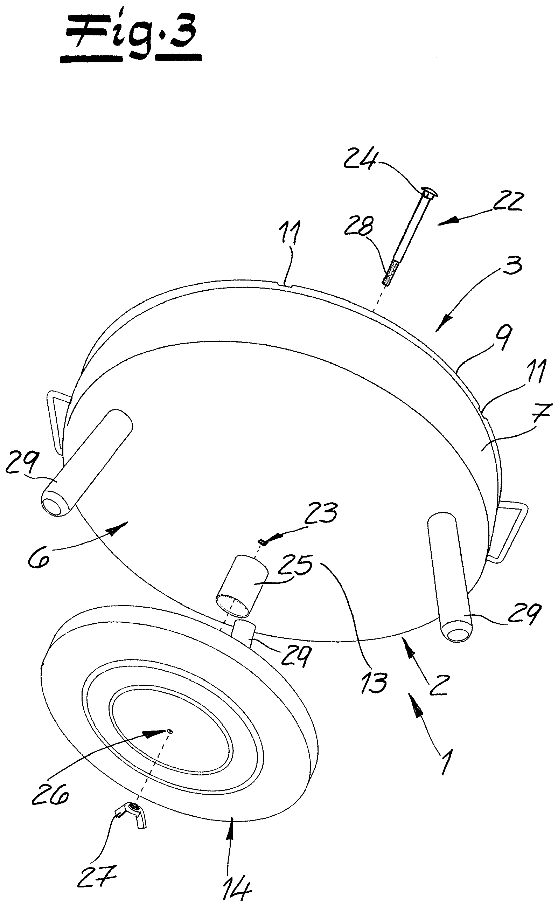

- Fig. 3: eine Explosionsdarstellung des Gegenstandes nach Fig. 2,

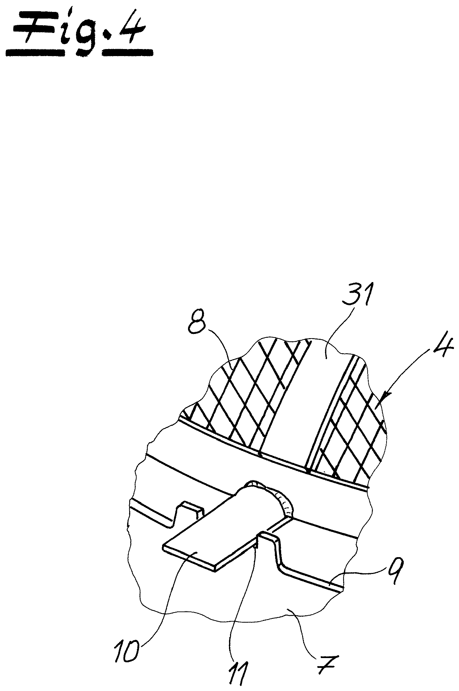

- Fig. 4: einen vergrößerten Ausschnitt einer perspektivischen Draufsicht auf die erfindungsgemäße Feuerschale,
- Fig. 5: einen vergrößerten Ausschnitt aus der Fig. 1 in einer anderen Ansicht und
- Fig. 6: eine perspektivische Darstellung einer Manipuliervorrichtung für das erfindungsgemäße Feuerschalenaggregat.

Die Erfindung betrifft eine Feuerschale 1 für die Verbrennung von Holz, Holzkohle und dergleichen Brennmaterialien, wobei eine Schalenbasis 2 mit einer oberen Schalenöffnung zur Aufnahme des nicht dargestellten Brennmaterials vorgesehen ist. Eine Funkenschutzeinrichtung 4 deckt die Schalenöffnung 3 lediglich in ihrem Randbereich ab und im mittleren Bereich der Schalenöffnung 3 bzw. über den mittleren Bereich der Schalenöffnung 3 ist eine Zentralausnehmung 5 vorgesehen, die bevorzugt und im Ausführungsbeispiel kreisrund ausgebildet ist. Vorzugsweise und im Ausführungsbeispiel ist die Funkenschutzeinrichtung 4 als separates Bauteil auf der Schalenbasis 2 lediglich aufgelegt und von der Schalenbasis 2 entfernbar bzw. abhebbar. Dazu dient - wie nachfolgend noch näher beschrieben - die erfindungsgemäße Manipuliervorrichtung 15.

Zweckmäßigerweise und im Ausführungsbeispiel weist die Schalenbasis 2 einen unteren Schalenboden 6 und eine im Ausführungsbeispiel an den Schalenboden 6 einstückig angeschlossene und über den Umfang der Schalenbasis 2 umlaufende Schalenwand 7 auf. Im Ausführungsbeispiel geht der bevorzugt horizontal orientierte Schalenboden 6 über einen abgerundeten Übergangsbereich in die vertikale Schalenwand 7 über. Die erfindungsgemäße Feuerschale 1 ist in der Draufsicht bevorzugt und im Ausführungsbeispiel kreisförmig ausgebildet.

Nach empfohlener Ausführungsform und im Ausführungsbeispiel weist die Funkenschutzeinrichtung 4 eine gitterartige bzw. gitterförmige Funkenschutzfläche 8 auf und somit ist die Funkenschutzeinrichtung 4 gleichsam als Funkenschutzgitter ausgebildet. Es liegt im Rahmen der Erfindung, dass die gitterförmige Funkenschutzfläche 8 über den Umfang der Schalenbasis 2 bzw. über den Umfang des Randbereiches der Schalenöffnung 3 umläuft. Zweckmäßigerweise schließt dabei die Funkenschutzeinrichtung 4 bzw. die Funkenschutzfläche 8 an den oberen Rand 9 der Schalenwand 7 an bzw. unmittelbar an. Die Funkenschutzfläche 8 bzw. das Funkenschutzgitter ist bevorzugt und im Ausführungsbeispiel in Form von sich kreuzenden Gitterstäben ausgebildet, wobei es sich bei den Gitterstäben empfohlenermaßen um Metalldraht bzw. Stahldraht handelt. Die Maschenweite x · y des Funkenschutzgitters bzw. des Drahtgitters berechnet sich vorzugsweise aus x = 0,2 bis 10 mm und y = 0,2 bis 12 mm. Die Funkenschutzfläche 8 bzw. das Funkenschutzgitter deckt in der Projektion auf die horizontale Öffnungsfläche der Schalenöffnung 3 bevorzugt und im Ausführungsbeispiel mehr als 30% dieser Öffnungsfläche ab und deckt vorzugsweise maximal 70% dieser Öffnungsfläche ab. Der Rest der horizontalen Öffnungsfläche der Schalenöffnung 3 wird bevorzugt und im Ausführungsbeispiel durch die Projektion der Fläche der Zentralausnehmung 5 auf diese Öffnungsfläche bestimmt.

Nach bevorzugter Ausführungsform und im Ausführungsbeispiel weist die Funkenschutzeinrichtung 4 eine von der Schalenbasis 2 bzw. vom oberen Rand 9 der Schalenwand 7 aus schräg zur Zentralausnehmung 5 hin aufsteigende Funkenschutzfläche 8 auf. Zweckmäßigerweise und im Ausführungsbeispiel ist dabei die Funkenschutzfläche 8 nach oben hin gewölbt ausgebildet, so dass bevorzugt und im Ausführungsbeispiel die Funkenschutzeinrichtung 4 bzw. deren Funkenschutzfläche 8 insgesamt eine kugelschalenabschnittsförmige Ausgestaltung annimmt. Der aufgrund des schrägen Anstieges der Funkenschutzfläche 8 resultierende Höhenunterschied Δh zwischen dem oberen Rand 9 der Schalenwand 7 und der Zentralausnehmung 5 beträgt empfohlenermaßen und im Ausführungsbeispiel mindestens 40% der Höhe H bzw. der vertikalen Höhe H der Schalenwand 7.

Es liegt weiterhin im Rahmen der Erfindung, dass die Funkenschutzeinrichtung 4 zumindest ein Positionierelement zur Positionierung der Funkenschutzeinrichtung 4 auf der Schalenbasis 2 aufweist, wobei das Positionierelement mit zumindest einem an der Schalenwand 7 angeordneten Komplementärelement in Eingriff ist. Vorzugsweise und im Ausführungsbeispiel weist die Funkenschutzeinrichtung 4 vier Positionslaschen 10 als Positionierelemente auf, wobei diese Positionierlaschen 10 in zugeordnete als Komplementärnuten 11 ausgebildete Komplementärelemente am oberen Rand 9 der Schalenwand 7 eingreifen. Im Ausführungsbeispiel sind vier Positionierlaschen 10 sowie vier zugeordnete Komplementärnuten 11 vorhanden, die jeweils über den Umfang der Feuerschale 1 verteilt angeordnet sind.

Zweckmäßigerweise und im Ausführungsbeispiel ist eine Hitzeschutzeinrichtung in Form einer Hitzeschutzplatte 14 unterhalb der Feuerschale 1 bzw. unterhalb der Schalenbasis 2 vorgesehen. Damit wird der Untergrund 12 unter der Feuerschale 1 vor übermäßiger Hitze geschützt. Die Hitzeschutzeinrichtung bzw. die Hitzeschutzplatte 14 ist vorzugsweise und im Ausführungsbeispiel mit Abstand a zur Unterseite 13 des Schalenbodens 6 angeordnet. Dabei ist die Hitzeschutzplatte 14 bevorzugt parallel bzw. im Wesentlichen parallel zum Schalenboden 6 orientiert. Empfohlenermaßen und im Ausführungsbeispiel ist die Hitzeschutzplatte 14 zentral bzw. in der Mitte des Schalenbodens 6 fixiert. Zweckmäßigerweise und im Ausführungsbeispiel erfolgt diese zentrale Fixierung bzw. Aufhängung der Hitzeschutzplatte 14 mit lediglich einem Fixierungsstift 22. Dieser Fixierungsstift 22 durchgreift vorzugsweise eine bevorzugt rechteckig bzw. quadratisch ausgestaltete Fixierungsöffnung 23 in dem Schalenboden 6. Der Fixierungsöffnung 23 ist zweckmäßigerweise ein Vierkantabschnitt 24 des Fixierungsstiftes 22 zugeordnet, so dass der Fixierungsstift 22 letztendlich verdrehsicher in der rechteckigen bzw. quadratischen Fixierungsöffnung 23 sitzt bzw. fixiert ist. Fernerhin wird der Fixierungsstift 22 empfohlenermaßen und im Ausführungsbeispiel von einer zylinderförmigen Fixierungshülse 25 umschlossen und schließlich durchgreift der Fixierungsstift 22 bevorzugt und im Ausführungsbeispiel eine Befestigungsöffnung 26 in der Hitzeschutzplatte 14. Dabei wird die Fixierung an der Hitzeschutzplatte 14 zweckmäßigerweise mittels einer auf den Fixierungsstift 22 aufgeschraubten Flügelmutter 27 vorgenommen, wozu ein Schraubabschnitt 28 des Fixierungsstiftes 22 vorgesehen ist. Vorzugsweise beträgt im montierten Zustand der Abstand a der Hitzeschutzplatte 14 von der Unterseite 13 des Schalenbodens 6 mindestens 20% des Abstandes A der Unterseite 13 von dem Untergrund 12.

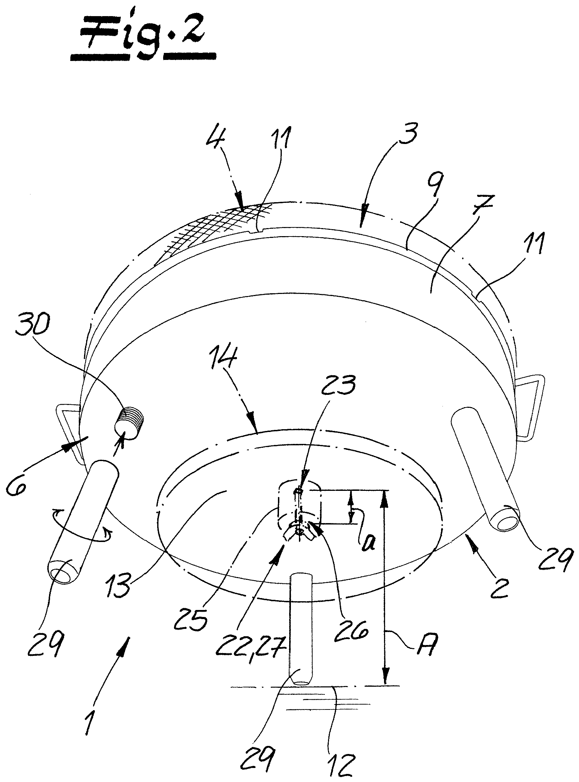

Insbesondere der Fig. 2 ist entnehmbar, dass die erfindungsgemäße Feuerschale 1 im Ausführungsbeispiel drei über den Umfang des Schalenbodens 6 verteilte Standfüße 29 aufweist. Zweckmäßigerweise und im Ausführungsbeispiel sind an dem Schalenboden 6 Gewindeabschnitte 30 vorgesehen, auf die die Standfüße 29 mit einem entsprechenden Innengewinde einfach aufgeschraubt bzw. manuell aufgeschraubt werden können. Den Figuren ist entnehmbar, dass die Montage der erfindungsgemäßen Feuerschale bzw. des erfindungsgemäßen Feuerschalenaggregates auf einfache Weise und vor allem ohne zwingenden Einsatz von Werkzeug manuell durchgeführt werden kann.

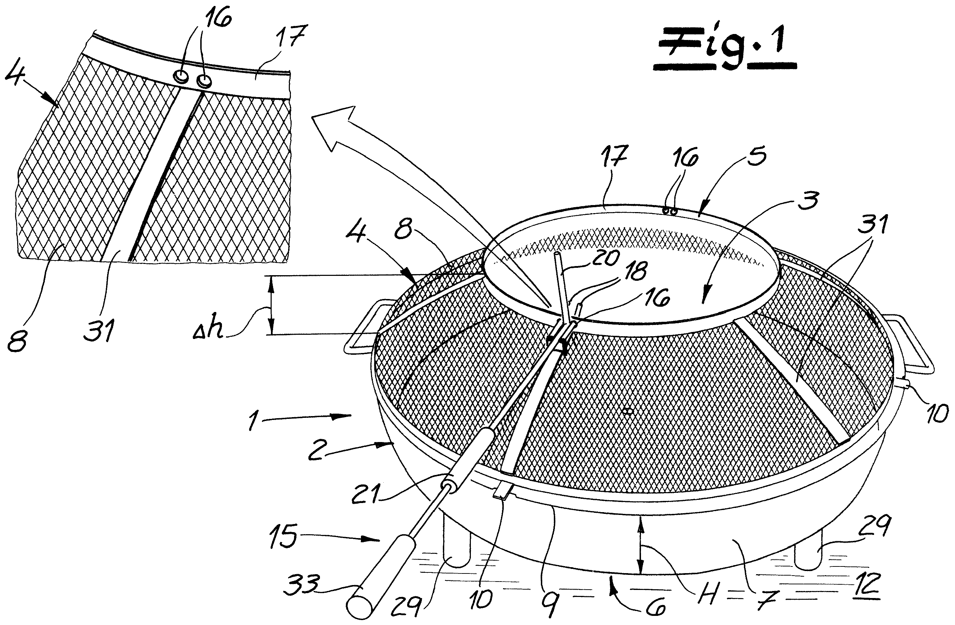

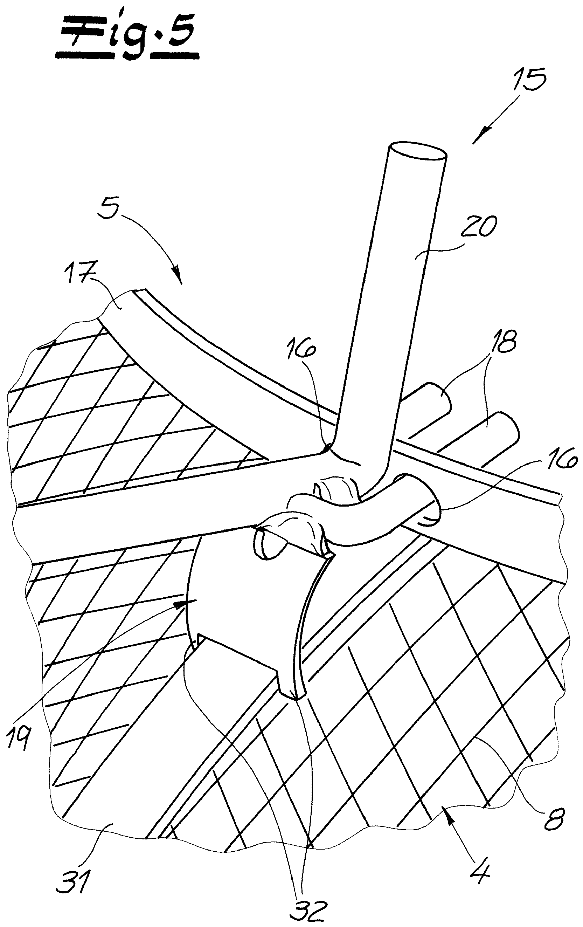

Die Fig. 1 zeigt ein erfindungsgemäßes Feuerschalenaggregat aus der erfindungsgemäßen Feuerschale 1 und einer daran angeschlossenen erfindungsgemäßen Manipuliervorrichtung 15. Für den Anschluss der Manipuliervorrichtung 15 weist die Funkenschutzeinrichtung 4 bevorzugt und im Ausführungsbeispiel an gegenüberliegenden Seiten der Zentralausnehmung 5 jeweils zwei als Manipulieröffnungen 16 ausgebildete Manipulierelemente auf. Die Manipuliervorrichtung 15 ist vorzugsweise und im Ausführungsbeispiel mit zwei an einer Seite der Zentralausnehmung 5 angeordneten Manipulieröffnungen 16 in Eingriff bringbar und zwar empfohlenermaßen und im Ausführungsbeispiel mittels zwei am Ende der stabförmigen Manipuliervorrichtung 15 angeschlossenen Manipulierstiften 18 in Eingriff bringbar. Diesen Eingriff der Manipulierstifte 18 in die Manipulieröffnungen 16 der Funkenschutzeinrichtung 4 zeigt die Fig. 1 und insbesondere die Fig. 5. Es liegt im Rahmen der Erfindung, dass die Manipulieröffnungen 16 an dem die Zentralausnehmung 5 begrenzenden Rand der Funkenschutzeinrichtung 4 angeordnet sind. Vorzugsweise und im Ausführungsbeispiel ist ein Einfassungsring 17 der Funkenschutzeinrichtung 4 an dem die Zentralausnehmung 5 begrenzenden Rand vorgesehen und die Manipulieröffnungen 16 sind bevorzugt in diesem das Funkenschutzgitter begrenzenden Einfassungsring 17 vorhanden.

Zweckmäßigerweise und im Ausführungsbeispiel ist die Manipuliervorrichtung 15 mit einem Abstützelement 19 versehen. Dieses Abstützelement 19 dient der Abstützung der Manipuliervorrichtung 15 auf der Funkenschutzeinrichtung 4 im Zuge des Anhebens der Funkenschutzeinrichtung 4 von der Schalenbasis 2. Diese Abstützung der Manipuliervorrichtung durch das Abstützelement 19 ist vor allem in der Fig. 5 deutlich erkennbar. Hier stützt sich das Abstützelement 19 der Manipuliervorrichtung 15 auf einer Verstärkungsstrebe 31 der Funkenschutzeinrichtung 4 ab. Eine Mehrzahl solcher Verstärkungsstreben 31 der Funkenschutzeinrichtung 4 erstreckt sich bevorzugt und im Ausführungsbeispiel vom oberen Rand 9 der Schalenwand 7 zur Zentralausnehmung 5 bzw. zum Einfassungsring 17 hin. Empfohlenermaßen und im Ausführungsbeispiel sind diese Verstärkungsstreben 31 über den Umfang der Funkenschutzeinrichtung 4 verteilt angeordnet (Fig. 1). In der Fig. 5 ist weiterhin erkennbar, dass das Abstützelement 19 vorzugsweise und im Ausführungsbeispiel zwei Abstützfortsätze 32 aufweist, die beim Abstützen des Abstützelementes 19 auf der Verstärkungsstrebe 31 die Verstärkungsstrebe 31 zwischen sich aufnehmen. Auf diese Weise ist eine abrutschsichere Abstützung und ein besonders funktionssicheres Anheben der Funkenschutzeinrichtung 4 mit Hilfe der Manipuliervorrichtung 15 möglich.

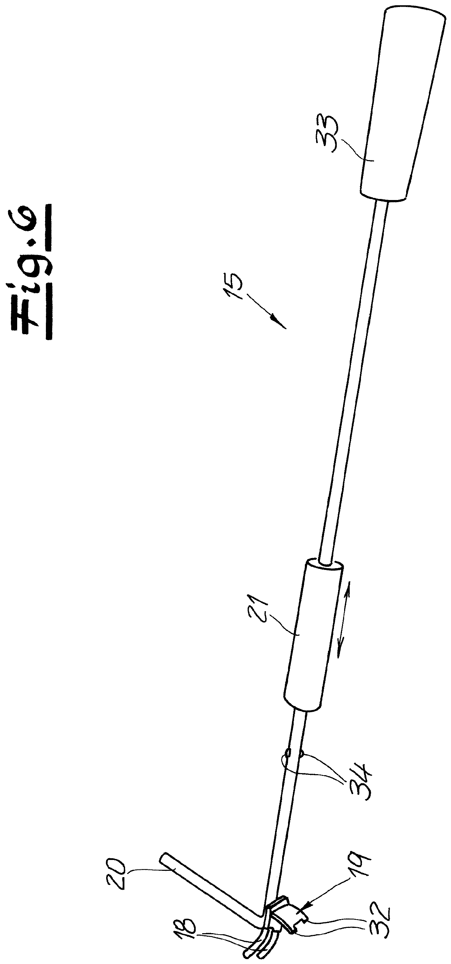

In der Fig. 6 ist die erfindungsgemäße Manipuliervorrichtung 15 über ihre gesamte Länge dargestellt. Zweckmäßigerweise und im Ausführungsbeispiel ist die Manipuliervorrichtung 15 stabförmig ausgebildet und zwar bevorzugt und im Ausführungsbeispiel als Schürhaken mit einem Hakenfortsatz 20. Empfohlenermaßen und im Ausführungsbeispiel wird also die stabförmige Manipuliervorrichtung 15 zugleich als Schürhaken für die Feuerschale eingesetzt. Zweckmäßigerweise und im Ausführungsbeispiel ist der Hakenfortsatz 20 sowie die beiden Manipulierstifte 18 und auch das Abstützelement 19 an dem gleichen Ende der stabförmigen Manipuliervorrichtung 15 bzw. an dem gleichen Ende des Schürhakens angeordnet. In der Fig. 6 ist erkennbar, dass die Manipuliervorrichtung 15 an dem anderen Ende einen ortsfesten Handgriff 33 aufweist sowie zusätzlich einen verschiebbaren Handgriff 21, der in Längsrichtung der Manipuliervorrichtung 15 verschiebbar ist, so dass die stabförmige Manipuliervorrichtung 15 flexibel bzw. variabel handhabbar bzw. ergreifbar ist. Die Bewegung des verschiebbaren Handgriffes 21 wird bevorzugt und im Ausführungsbeispiel in Richtung des Hakenfortsatzes 20 bzw. in Richtung der Manipulierstifte 18 durch zumindest ein Begrenzungselement eingeschränkt, wobei Begrenzungselemente zweckmäßigerweise und im Ausführungsbeispiel in Form von Anschlagnocken 34 ausgebildet sind.

Vorzugsweise und im Ausführungsbeispiel sind im Übrigen die Manipulierstifte 18 kürzer bzw. deutlich kürzer als der Hakenfortsatz 20 ausgebildet. Auch das Abstützelement 19 ist empfohlenermaßen und im Ausführungsbeispiel kürzer bzw. deutlich kürzer als der Hakenfortsatz 20 ausgeführt.

## Patentansprüche

1. Feuerschale (1) für die Verbrennung von Holz, Holzkohle und dergleichen Brennmaterialien, wobei eine Schalenbasis (2) mit einer oberen Schalenöffnung (3) zur Aufnahme des Brennmaterials vorgesehen ist und wobei eine auf der Schalenbasis angeordnete Funkenschutzeinrichtung (4) vorhanden ist, wobei die Funkenschutzeinrichtung (4) die Schalenöffnung (3) lediglich in ihrem Randbereich abdeckt und im mittleren Bereich der Schalenöffnung (3) bzw. über den mittleren Bereich der Schalenöffnung (3) eine Ausnehmung bzw. eine Zentralausnehmung (5) aufweist.

2. Feuerschale nach Anspruch 1, wobei die Schalenbasis (2) einen Schalenboden (6) und eine an den Schalenboden (6) angeschlossene - insbesondere einstückig angeschlossene - über den Umfang der Schalenbasis (2) umlaufende Schalenwand (7) aufweist.

3. Feuerschale nach einem der Ansprüche 1 oder 2, wobei die Funkenschutzeinrichtung (4) eine gitterartige bzw. gitterförmige Funkenschutzfläche (8) aufweist und wobei vorzugsweise diese Funkenschutzfläche (8) über den Umfang der Schalenbasis (2) bzw. über den Umfang des Randbereiches der Schalenöffnung (3) umläuft.

4. Feuerschale nach einem der Ansprüche 1 bis 3, wobei die Funkenschutzeinrichtung (4) bzw. die zugehörige Funkenschutzfläche (8) mindestens 10%, vorzugsweise mindestens 15%, bevorzugt mindestens 20% und insbesondere mindestens 25% der Öffnungsfläche bzw. der horizontalen Öffnungsfläche der Schalenöffnung (3) abdeckt.

5. Feuerschale nach einem der Ansprüche 1 bis 4, wobei die - insbesondere von der Funkenschutzeinrichtung (4) bzw. von der zugeordneten Funkenschutzfläche (8) umgebene - Ausnehmung bzw. Zentralausnehmung (5) eine Ausnehmungsfläche aufweist, die mindestens 10%, vorzugsweise mindestens 15%, bevorzugt mindestens 20% und insbesondere mindestens 25% der Öffnungsfläche bzw. der horizontalen Öffnungsfläche der Schalenöffnung (3) entspricht.

6. Feuerschale nach einem der Ansprüche 1 bis 5, wobei die Funkenschutzeinrichtung (4) eine von der Schalenbasis (2) bzw. von der Schalenwand (7) aus schräg zur Ausnehmung bzw. zur Zentralausnehmung (5) hin aufsteigende Funkenschutzfläche (8) aufweist.

7. Feuerschale nach einem der Ansprüche 1 bis 6, wobei die Funkenschutzreinrichtung (4) zumindest ein Positionierelement zur Positionierung der Funkenschutzeinrichtung (4) auf der Schalenbasis (2) aufweist, welches Positionierelement mit zumindest einem an der Schalenwand (7), insbesondere am oberen Rand (9) der Schalenwand (7) angeordneten Komplementärelement in Eingriff ist und wobei vorzugsweise das Positionierelement als Positionierlasche (10) oder Positionierstift ausgebildet ist und das Komplementärelement als Komplementärnut (11) bzw. Komplementäröffnung für die Aufnahme der Positionierlasche (10) bzw. des Positionierstiftes ausgeführt ist.

8. Feuerschale nach einem der Ansprüche 1 bis 7, wobei eine Hitzeschutzeinrichtung zum Schutz eines Untergrundes (12) vor Hitze vorgesehen ist und wobei die Hitzeschutzeinrichtung unterhalb der Schalenbasis (2) - vorzugsweise mit Abstand a zur Unterseite (13) des Schalenbodens (6) - angeordnet ist und wobei die Hitzeschutzeinrichtung zumindest eine Hitzeschutzplatte (14) aufweist.

9. Feuerschale nach einem der Ansprüche 1 bis 8, wobei die Funkenschutzeinrichtung (4) zumindest ein Manipulierelement für den Eingriff bzw. für die Aufnahme einer Manipuliervorrichtung (15) zur Handhabung der Funkenschutzeinrichtung (4) aufweist.

10. Feuerschalenaggregat aus einer Feuerschale (1) - insbesondere nach einem der Ansprüche 1 bis 8 - und einer Manipuliervorrichtung (15), wobei die Feuerschale (1) eine Schalenbasis (2) und eine auf der Schalenbasis (2) angeordnete Funkenschutzeinrichtung (4) aufweist, wobei die Funkenschutzeinrichtung (4) von der Schalenbasis (2) abnehmbar ist, wobei die Funkenschutzeinrichtung (4) zumindest ein Manipulierelement - insbesondere zumindest eine Manipulieröffnung (16) - aufweist, wobei die Manipuliervorrichtung (15) mit dem Manipulierelement bzw. mit der Manipulieröffnung (16) in Eingriff bringbar ist, so dass mittels der Manipuliervorrichtung (15) die Funkenschutzeinrichtung (4) von der Schalenbasis (2) abhebbar bzw. entfernbar ist.

11. Feuerschalenaggregat nach Anspruch 10, wobei das zumindest eine Manipulierelement - insbesondere die zumindest eine Manipulieröffnung (16) - an dem die Ausnehmung bzw. Zentralausnehmung (5) begrenzenden Rand der Funkenschutzeinrichtung (4) angeordnet ist, wobei vorzugsweise ein Einfassungsring (17) der Funkenschutzeinrichtung (4) an dem die Ausnehmung bzw. Zentralausnehmung (5) begrenzenden Rand angeordnet ist und wobei das zumindest eine Manipulierelement an dem Einfassungsring (17) angeordnet ist, bevorzugt die zumindest eine Manipulieröffnung (16) in dem Einfassungsring (17) vorgesehen ist.

12. Feuerschalenaggregat nach einem der Ansprüche 10 oder 11, wobei die Manipuliervorrichtung (15) zumindest einen Manipulierstift (18) für den Eingriff in eine Manipulieröffnung (16) der Funkenschutzeinrichtung (4) aufweist und wobei vorzugsweise zumindest zwei, bevorzugt zwei Manipulierstifte (18) für den Eingriff in zumindest zwei zugeordnete, bevorzugt zwei zugeordnete Manipulieröffnungen (16) der Funkenschutzeinrichtung (4) vorgesehen sind.

13. Feuerschalenaggregat nach einem der Ansprüche 10 bis 12, wobei die Manipuliervorrichtung (15) zumindest ein Abstützelement (19) für die Abstützung der Manipuliervorrichtung (15) auf der Funkenschutzeinrichtung (4) beim Abheben der Funkenschutzeinrichtung (4) von der Schalenbasis (2) aufweist.

14. Feuerschalenaggregat nach einem der Ansprüche 10 bis 13, wobei die Manipuliervorrichtung (15) als Schürhaken mit zumindest einem Hakenfortsatz (20) ausgebildet ist und wobei vorzugsweise der Hakenfortsatz (20) und der zumindest eine Manipulierstift (18) - bevorzugt die beiden Manipulierstifte (18) - an dem gleichen Ende des Schürhakens angeordnet sind.

15. Feuerschalenaggregat nach einem der Ansprüche 10 bis 14, wobei die Manipuliervorrichtung (15) zumindest einen parallel zu ihrer Längsachse verschiebbaren Handgriff (21) aufweist und wobei bevorzugt vor dem mit dem zumindest einen Manipulierstift (18) versehenen Ende der Manipuliervorrichtung (15) zumindest ein Begrenzungselement für die Begrenzung der Verschiebbarkeit des Handgriffes (21) vorgesehen ist.
